# EUROPÄISCHE PATENTSCHRIFT

(11) **EP 2 319 806 B1**
(45) Veröffentlichungstag und Bekanntmachung des Hinweises auf die Patenterteilung: **05.04.2017**
(21) Anmeldenummer: 09405176.0
(22) Anmeldetag: 06.10.2009
(51) Int. Cl.: C02F 1/467, C02F 1/461

(54) **Wasserauslaufarmatur mit elektrochemischer Zelle und Verfahren zum Betrieb einer solchen Wasserauslaufarmatur**
Water drain fitting comprising electrochemical cell and method for operating the same
Armature d'écoulement d'eau comprenant une cellule électrochimique et procédé de fonctionnement d'une telle armature d'écoulement d'eau

(43) Veröffentlichungstag der Anmeldung: 11.05.2011
(73) Patentinhaber: Geberit International AG, 8645 Jona (CH)
(72) Erfinder: Widler, Roland, 8335 Hittnau (CH); Keck, Joachim, 9485 Nendeln (LI)
(74) Vertreter: Frischknecht, Harry Ralph

(56) Entgegenhaltungen:
- EP-A2- 0 505 125
- WO-A1-93/18854
- WO-A2-02/14228
- DE-U1-202005 013 377
- JP-A- 61 097 093
- JP-A- 2002 345 675
- US-A- 4 917 782

## Beschreibung

Die Erfindung betrifft eine Wasserauslaufarmatur mit einem Armaturenkörper, der einen Wasserkanal mit einem Einlass und einem Auslass aufweist, mit einem Wasserventil und mit Mitteln zum Desinfizieren des Wassers.

Eine Wasserauslaufaramatur dieser Art ist im Stand der Technik durch die US 7,488,419 bekannt geworden. Diese besitzt einen Ozonisator, der über eine Luftleitung mit einem Einsatz im Auslass verbunden ist. Über die Leitung kann dem Wasser unmittelbar beim Auslass Ozon zugeführt und damit Unreinheiten und insbesondere Keime abgetötet werden. Mit dem Ozon können organische Belastungen durch Oxidation mineralisiert werden. Verglichen mit der ebenfalls bekannten Desinfektion durch UV-Lampen ist eine Desinfektion durch Oxidation mittels Ozon wesentlich leistungsfähiger. Die Erzeugung von Ozon aus Luft ist jedoch vergleichsweise aufwendig und dies gilt ebenfalls für die Zuführung des Ozons mittels einer Luftleitung zum Auslass.

Der Erfindung liegt die Aufgabe zugrunde, eine Wasserauslaufarmatur der genannten Art zu schaffen, die eine noch höhere Sicherheit gewährleistet.

Die Aufgabe ist bei einer gattungsgemässen Wasserauslaufarmatur dadurch gelöst, dass das Mittel zum Desinfizieren des Wassers eine im Wasserkanal angeordnete elektrochemische Zelle ist. Für die Erfindung ist es wesentlich und vorteilhaft, dass das Ozon unmittelbar dort erzeugt wird, wo das Wasser gebraucht wird. Die elektrochemische Zelle desinfiziert das Wasser somit nicht in einer vom Auslass weit entfernten Stelle einer Zuführleitung, sondern in unmittelbarer Nähe des Auslasses. Eine Rückverkeimung kann dadurch vermieden werden. Ein Gerät zur Erzeugung von Ozon ausserhalb der Armatur und eine entsprechende Luftleitung sind nicht erforderlich.

Elektrochemische Zellen zum Desinfizieren von Wasser sind an sich beispielsweise aus der WO 2006/092125 bekannt. Bisher wurden solche Zellen jedoch in der Versorgungsleitung angeordnet. Bei einer Warmwasserarmatur mit einem Mischventil wären somit zwei solche elektrochemische Zellen erforderlich, eine in der Warmwasserleitung und die andere in der Kaltwasserleitung. Die erfindungsgemässe Wasserauslaufarmatur gewährleistet eine hohe Sicherheit und Wasserqualität.

JP-A-61097093 offenbart eine Wasserauslaufarmatur, bei der eine elektrochemische Zelle mit zwei Elektroden in den Wasserkanal des Armaturenkörpers stromabwärts eines Ventils eingesetzt ist.

Nach der Erfindung ist vorgesehen, dass die elektrochemische Zelle im Wasserkanal in einem Bereich angeordnet ist, in dem sich bei geschlossenem Wasserventil stehendes Wasser und bei geöffnetem Wasserventil fliessendes Wasser befindet und die elektrochemische Zelle sich im ersten Fall in stehendem Wasser befindet und im zweiten Fall von Wasser umspült oder durchspült wird. Dadurch ist gewährleistet, dass sich die Elektroden der elektrochemischen Zelle immer im Wasser befinden und damit nicht austrocknen können. Dies ist dann besonders sicher gewährleistet, wenn sich die elektrochemische Zelle in einem aufsteigenden Bereich des Wasserkanals befindet. Die elektrochemische Zelle kann sich in Strömungsrichtung gesehen nach oder vor dem Wasserventil befinden. Vorzugsweise ist jedoch die elektrochemische Zelle nach dem Wasserventil in einem aufsteigenden Bereich des Wasserkanals angeordnet.

Eine besonders sichere und vollständige Desinfektion ist dann gewährleistet, wenn gemäss einer Weiterbildung der Erfindung in Strömungsrichtung gesehen nach der elektrochemischen Zelle eine Mischeinheit angeordnet ist, in der von der elektrochemischen Zelle abgegebenes Oxidationsmittel mit Wasser durchmischt wird. Diese Mischeinheit ist ebenfalls vorzugsweise in einem aufsteigenden Bereich des Wasserkanals angeordnet. Die Durchmischung erfolgt vorzugsweise unmittelbar unterhalb des Wasserniveaus des aufsteigenden Bereichs.

Nach einer Weiterbildung der Erfindung ist vorgesehen, dass die Wasserauslaufarmatur wenigstens einen mit einer Steuereinheit verbundenen Sensor aufweist, dass die Steuereinheit mit der elektrochemischen Zelle verbunden ist und dass die elektrochemische Zelle über den Sensor aktivierbar ist. Dadurch ist es möglich, die elektrochemische Zelle genau dann zu aktivieren, wenn der Wasserauslaufarmatur Wasser entnommen werden soll. Der Sensor ist beispielsweise ein Näherungssensor, der beispielsweise auf die Bewegung einer Hand anspricht. Gleichzeitig kann über einen solchen Näherungssensor das Wasserventil geöffnet und geschlossen werden. Kommt beispielsweise eine Hand in die Nähe eines solchen Näherungssensors, so wird die elektrochemische Zelle aktiviert und diese beginnt damit mit der Abgabe eines Oxidationsmittels in das Wasser. Im Wesentlichen gleichzeitig wird das Wasserventil geöffnet. Befindet sich die Hand nicht mehr im Erfassungsbereich des Sensors, so wird entsprechend das Wasserventil geschlossen und die elektrochemische Zelle deaktiviert.

Nach einer Weiterbildung der Erfindung ist vorgesehen, dass in Strömungsrichtung gesehen nach der elektrochemischen Zelle im Wasserkanal Messmittel zum Ermitteln der Ozonkonzentration im Wasser angeordnet sind. Solche Mittel ermöglichen eine Steuerung der elektrochemischen Zelle insbesondere im Hinblick auf die Qualität des Wassers. Zudem ist eine Überwachung der elektrochemischen Zelle möglich. Hierzu ist gemäss einer Weiterbildung der Erfindung vorgesehen, dass die Wasserauslaufarmatur Anzeigemittel zur gemessenen Ozonkonzentration aufweist. Sinkt die Ozonkonzentration unter einen vorbestimmten Wert, so wird dies entsprechend angezeigt. Das Anzeigemittel besitzt beispielsweise eine grüne und eine rote Diode. Leuchtet die grüne Diode, so ist die gemessene Ozonkonzentration im vorgesehenen Bereich. Leuchtet die rote Diode, so ist die Ozonkonzentration ungenügend. Entsprechend kann das Wasserventil so gesteuert sein, dass bei einer ungenügenden Ozonkonzentration das Ventil nicht öffnet oder schliesst.

Nach einer Weiterbildung der Erfindung ist vorgesehen, dass die Wasserauslaufarmatur Mittel zum Messen der Wasserqualität aufweist. Diese Messmittel messen beispielsweise die organische Fracht des desinfizierten Wassers. Die Messung erfolgt beispielsweise über das Redoxpotenzial des Wassers. Bei einer solchen Messung wird auch eine eventuelle Verkeimung gemessen. Vorzugsweise ist vorgesehen, dass die elektrochemische Zelle aufgrund der Messung der Wasserqualität gesteuert wird. Je höher die Belastung des Wassers, desto höher ist entsprechend die Produktion des Oxidationsmittels. Die genannten Messmittel sind vorzugsweise unmittelbar am Ausgang des Wasserkanals oder am Ausgang einer Mischkammer angeordnet.

Gemäss einer Weiterbildung der Erfindung sind Alarmmittel vorgesehen, die ansprechen, sobald ein vorbestimmter Wert bezüglich der Wasserqualität überschritten ist. Die Alarmmittel können eine optische Anzeige aufweisen und können so ausgebildet sein, dass gleichzeitig das Wasserventil geschlossen wird und/oder nicht mehr geöffnet werden kann.

Die Erfindung betrifft zudem ein Verfahren zum Betrieb einer Wasserauslaufarmatur. Bei diesem Verfahren wird die elektrochemische Zelle mit einem im Wasserkanal angeordneten Messmittel entsprechend wenigstens einem Kriterium geregelt.

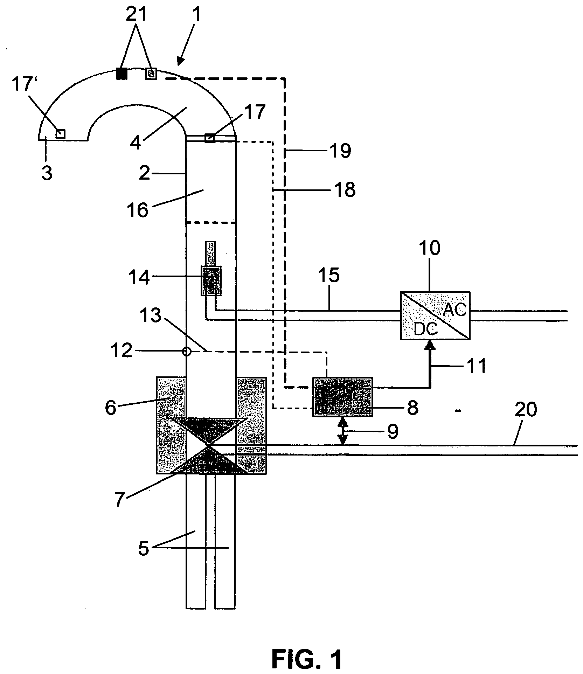

Ein Ausführungsbeispiel der erfindungsgemässen Wasserauslaufarmatur wird nachfolgend anhand der einzigen Figur erläutert. Die Figur zeigt schematisch eine erfindungsgemässe Wasserauslaufarmatur.

Die Wasserauslaufarmatur 1 besitzt ein im Wesentlichen rohrförmig ausgebildetes Gehäuse 2, das mittels eines Sockels 6 beispielsweise auf einem hier nicht gezeigten Waschtisch montierbar ist. Im Gehäuse 2 verläuft ein Wasserkanal 4, in dem ein Wasserventil, beispielsweise ein Magnetventil angeordnet ist. Das Wasserventil 7 ist beispielsweise ein Mischventil und an zwei Wasserleitungen 5 angeschlossen. Die eine dieser Wasserleitungen 5 ist für Warmwasser und die andere für Kaltwasser vorgesehen. Das Ventil 7 wird über eine elektrische Leitung 20 gesteuert. Über eine Steuereinheit 8 kann das Wasserventil 7 mittels eines Sensors 12 geöffnet und geschlossen werden. Hierzu ist der Sensor 12 über eine Signalleitung 13 mit der Steuereinheit 8 und diese mit einer Signalleitung 9 mit dem Wasserventil 7 verbunden. Der Sensor 12 ist insbesondere ein Näherungssensor. Solche Sensoren sind an sich bekannt und brauchen hier deshalb nicht näher erläutert zu werden. Ist das Wasserventil 7 geöffnet, so fliesst Wasser aus den Wasserleitungen 5 durch den Wasserkanal 4 zu einem Auslass 3. Das Öffnen des Wasserventils 7 kann beispielsweise berührungslos mit einer Handbewegung geöffnet werden.

Im Wasserkanal 4 ist eine elektrochemische Zelle 14 angeordnet. Diese befindet sich wie ersichtlich im aufsteigenden Bereich des Wasserkanals 4 und ist somit auch bei geschlossenem Wasserventil 7 von Wasser umgeben. Die elektrische Versorgung der elektrochemischen Zelle 14 erfolgt über einen Transformator 10 und eine elektrische Leitung 15. Die elektrochemische Zelle 14 ist als Modul ausgebildet und besitzt in an sich bekannter Weise eine hier nicht gezeigte Anode sowie eine Kartode. Ist an die Elektroden eine Gleichspannung angelegt, so werden aufgrund an sich bekannter chemischer Reaktionen an den Elektroden oxidierende Stoffe erzeugt, welche auf organische Stoffe im Wasser desinfizierend wirken. Die Elektroden sind beispielsweise solche, die mit einer bordotierten Diamant-Beschichtung versehen sind.

In Strömungsrichtung gesehen ist nach der elektrochemischen Zelle eine Mischeinheit 16 angeordnet. In dieser werden die an der elektrochemischen Zelle 14 abgegebenen Stoffe und insbesondere oxidative Stoffe, beispielsweise Ozon mit dem Wasser gemischt. Die oxidativen Stoffe werden somit gleichmässig im Wasser verteilt. Diese Stoffe zerstören bzw. mineralisieren die vorhandenen organischen Stoffe und damit beispielsweise schädliche Keime sehr schnell. Das aus Auslass 3 austretende Wasser enthält somit im Wesentlichen keine organischen Stoffe mehr und ist damit desinfiziert.

Am Ausgang der Mischeinheit 16 ist ein Sensor 17 angeordnet, der über eine Signalleitung 18 mit der Steuereinheit 8 verbunden ist. Dieser Sensor 17 dient zur Ermittlung der Ozonkonzentration im Wasser, das aus der Mischeinheit 16 austritt. Die Ozonkonzentration am Ausgang der Mischeinheit 16 ist auf eine bestimmte Wasserqualität geeicht. Ändert die Wasserqualität, beispielsweise in dem der organische Anteil im Wasser zunimmt, so wird entsprechend die Leistung der elektrochemischen Zelle 14 nachgeführt bzw. erhöht. Die Regelung erfolgt aufgrund der Messung des Sensors 17. Sinkt der Anteil der organischen Substanzen, so wird entsprechend weniger Ozon zu deren Mineralisierung benötigt. Entsprechend erhöht sich die Ozonkonzentration. Die Regelung führt in diesem Fall zu einer Minderung der Leistung der elektrochemischen Zelle 14. Aufgrund dieser Regelung wird erreicht, dass im Wasser jeweils die optimale Menge an oxidierenden Stoffen erzeugt wird.

Anstelle einer Ozonkonzentrationsmessung kann auch ein anderer Parameter des Wassers gemessen werden. Beispielsweise kann das Redoxpotenzial gemessen werden. Die elektrochemische Zelle 14 wird dann aufgrund dieser Messung geregelt. Die Leistung der elektrochemischen Zelle 14 wird dann der entsprechenden Wasserqualität nachgeführt. Es sind auch andere Parameter bzw. Kriterien denkbar, welche mit der Wasserqualität bzw. Verkeimung zusammenhängen und die zur Regelung verwendet werden können.

Der Sensor 17 kann wahlweise auch als Sensor 17' unmittelbar im Bereich des Auslasses 3 angeordnet sein. Möglich wäre auch eine Anordnung von zwei Sensoren 17 bzw. 17'. Dadurch könnte eine Beeinflussung des Wassers im Bereich des Auslasses 3 berücksichtigt werden.

Die elektrochemische Zelle 14 ist so gesteuert, dass sie im Wesentlichen beim Öffnen des Wasserventils 7 aktiviert wird. Die Desinfektion des Wassers erfolgt damit ausschliesslich im Bedarfsfall. Nach dem Schliessen des Wasserventils 7 wird entsprechend die elektrochemische Zelle 14 deaktiviert.

Am Gehäuse 2 sind visuell erkennbar Kontrollleuchten 21 angeordnet, die über eine Signalleitung 19 mit der Steuereinheit 8 verbunden sind. Die Kontrollleuchten 21 zeigen den Wasserzustand aufgrund der Messung des Sensors 17 an. Im Fall eines Sensors 17' wird somit der Wasserzustand am Auslass 3 angezeigt. Ein grünes Licht zeigt beispielsweise an, dass die Wasserqualität hinreichend ist, während ein rotes Licht eine ungenügende Wasserqualität anzeigt. Bei einer ungenügenden Wasserqualität wird vorzugsweise selbsttätig das Wasserventil 7 geschlossen und kann vorläufig nicht geöffnet werden.

Die mit der Sonde 17 gemessene Ozonkonzentration ist selbstverständlich grösser als die mit der Sonde 17' am Auslass 3 gemessene Ozonkonzentration. Die maximale Ozonkonzentration im Bereich des Sensors 17' beträgt beispielsweise 0.05 mg pro Liter. Im Bereich des Sensors 17 kann diese Konzentration doppelt so hoch sein. Die Ozonproduktion ist umso grösser, je grösser der Volumenstrom ist. Eine höhere organische Fracht und eine höhere Leitfähigkeit mindert die Konzentration von Ozon im Bereich der Sensoren 17 und 17'. Aufgrund der oben genannten Regelung kann nun diese Ozonkonzentration optimal eingestellt bzw. geregelt werden.

### BEZUGSZEICHENLISTE

- 1: Wasserauslaufarmatur
- 2: Gehäuse
- 3: Auslass
- 4: Wasserkanal
- 5: Wasserleitungen
- 6: Sockel
- 7: Wasserventil
- 8: Steuereinheit
- 9: Signalleitung
- 10: Transformator
- 11: Signalleitung
- 12: Näherungssensor
- 13: Signalleitung
- 14: elektrochemische Zelle
- 15: elektrische Leitung
- 16: Mischeinheit
- 17: Sensor
- 18: Signalleitung
- 19: Signalleitung
- 20: elektrische Leitung
- 21: Kontrollleuchte

## Patentansprüche

1. Wasserauslaufarmatur mit einem Armaturenkörper (2), der ein Wasserkanal (4) mit einem Einlass und einem Auslass (3) aufweist, mit einem Wasserventil (7) und mit Mitteln (14) zum Desinfizieren des Wassers, wobei das Mittel (14) zum Desinfizieren des Wassers eine im Wasserkanal (4) angeordnete elektrochemische Zelle ist, wobei die elektrochemische Zelle (14) in Strömungsrichtung gesehen nach dem Wasserventil (7) angeordnet ist, **dadurch gekennzeichnet, dass** die elektrochemische Zelle (14) im Wasserkanal (4) in einem Bereich angeordnet ist, in dem sich bei geschlossenem Wasserventil (7) stehendes Wasser und bei geöffnetem Wasserventil fliessendes Wasser befindet und die elektrochemische Zelle (14) sich im ersten Fall in stehendem Wasser befindet und im zweiten Fall von Wasser umspült oder durchspült wird.

2. Wasserauslaufarmatur nach Anspruch 1, **dadurch gekennzeichnet, dass** die elektrochemische Zelle (14) in einem aufsteigenden Bereich des Wasserkanals angeordnet ist.

3. Wasserauslaufarmatur nach einem der Ansprüche 1 bis 2, **dadurch gekennzeichnet, dass** der Wasserkanal (4) im Armaturenkörper (2) angeordnet ist.

4. Wasserauslaufarmatur nach einem der Ansprüche 1 bis 3, **dadurch gekennzeichnet, dass** in Strömungsrichtung gesehen nach der elektrochemischen Zelle (14) wenigstens eine Mischeinheit (16) angeordnet ist, in der von der elektrochemischen Zelle (14) abgegebenes Oxidationsmittel mit Wasser durchmischt wird.

5. Wasserauslaufarmatur nach Anspruch 4, **dadurch gekennzeichnet, dass** die wenigstens eine Mischeinheit (16) in Strömungsrichtung gesehen nach dem Wasserventil (7) und nach der elektrochemischen Zelle (14) angeordnet ist.

6. Wasserauslaufarmatur nach Anspruch 5, **dadurch gekennzeichnet, dass** die wenigstens eine Mischeinheit (16) bei geschlossenem Wasserventil in einem oberen Bereich einer stehenden Wassersäule angeordnet ist.

7. Wasserauslaufarmatur nach einem der Ansprüche 1 bis 6, **dadurch gekennzeichnet, dass** sie wenigstens einen mit einer Steuereinheit (8) verbundenen Näherungssensor (12) aufweist, dass die Steuereinheit (8) mit der elektrochemischen Zelle (14) verbunden ist und dass die elektrochemische Zelle (14) über den Näherungssensor (12) aktivierbar ist.

8. Wasserauslaufarmatur nach einem der Ansprüche 1 bis 7, **dadurch gekennzeichnet, dass** sie in Strömungsrichtung gesehen nach der elektrochemischen Zelle (14) im Wasserkanal (4) Messmittel (17, 17') zum Ermitteln der Ozonkonzentration im Wasser aufweist.

9. Wasserauslaufarmatur nach Anspruch 8, **dadurch gekennzeichnet, dass** mittels der gemessenen Ozonkonzentration die elektrochemische Zelle (14) geregelt wird.

10. Wasserauslaufarmatur nach Anspruch 9, **dadurch gekennzeichnet, dass** die genannten Mittel (17, 17') am Ausgang der wenigstens einen Mischeinheit (16) und/oder am Auslass (3) des Wasserkanals (4) angeordnet sind.

11. Wasserauslaufarmatur nach einem der Ansprüche 1 bis 10, **dadurch gekennzeichnet, dass** sie Mittel (17, 17') zum Ermitteln eines Parameters aufweist, welcher bezüglich der Wasserqualität relevant ist und dass die elektrochemische Zelle (14) aufgrund dieser Messung geregelt wird.

12. Wasserauslaufarmatur nach einem der Ansprüche 1 bis 11, **dadurch gekennzeichnet**, das sie Anzeigemittel (21) aufweist, die einen Hinweis auf den Wasserzustand geben.

13. Verfahren zum Betrieb einer Wasserauslaufarmatur nach einem der Ansprüche 1 bis 12, **dadurch gekennzeichnet, dass** die Wasserauslaufarmatur eine Steuervorrichtung (8) aufweist und die elektrochemische Zelle (14) mittels einem im Wasserkanal (4) angeordneten Sensor (17, 17') geregelt wird.

14. Verfahren nach Anspruch 13, **dadurch gekennzeichnet, dass** der Sensor (17, 17') auf Ozon im Wasser anspricht und die elektrochemische Zelle (14) entsprechend der ermittelten Ozonkonzentration geregelt wird.

15. Verfahren nach Anspruch 14, **dadurch gekennzeichnet, dass** die Ozonkonzentration am Ausgang einer Mischeinheit (16) gemessen wird.

## Claims

1. Water outflow fitting with a fitting body (2) which has a water duct (4) with an inlet and an outlet (3), having a water valve (7) and having means (14) for disinfecting the water, wherein the means (14) for disinfecting the water is an electrochemical cell arranged in the water duct (4), wherein the electrochemical cell (14) is arranged downstream of the water valve (7), as seen in the direction of flow, **characterized in that** the electrochemical cell (14) is arranged in the water duct (4) in a region in which standing water is located when the water valve (7) is closed and flowing water is located when the water valve is open, and the electrochemical cell (14) being located in standing water in the first case and being washed around or washed through by water in the second case.

2. Water outflow fitting according to claim 1, **characterized in that** the electrochemical cell (14) is arranged in an ascending region of the water duct.

3. Water outflow fitting according to any one of the claims 1 to 2, **characterized in that** the water duct (4) is arranged in the fitting body (2).

4. Water outflow fitting according to any one of the claims 1 to 3, **characterized in that** at least one mixing unit (16) is arranged downstream of the electrochemical cell (14), as seen in the direction of flow, in which mixing unit oxidizing agent dispensed by the electrochemical cell (14) is intermixed with water.

5. Water outflow fitting according to claim 4, **characterized in that** the at least one mixing unit (16) is arranged downstream of the water valve (7) and downstream of the electrochemical cell (14), as seen in the direction of flow.

6. Water outflow fitting according to claim 5, **characterized in that** the at least one mixing unit (16) is arranged in an upper region of a standing water column when the water valve is closed.

7. Water outflow fitting according to any one of the claims 1 to 6, **characterized in that** it has at least one proximity sensor (12) connected to a control unit (8), **in that** the control unit (8) is connected to the electrochemical cell (14), and **in that** the electrochemical cell (14) is activatable via the proximity sensor (12).

8. Water outflow fitting according to any one of the claims 1 to 7, **characterized in that**, in the water duct (4) downstream of the electrochemical cell (14), as seen in the direction of flow, it has measurement means (17, 17') for determining the ozone concentration in the water.

9. Water outflow fitting according to claim 8, **characterized in that** the electrochemical cell (14) is regulated by means of the measured ozone concentration.

10. Water outflow fitting according to claim 9, **characterized in that** the said means (17, 17') are arranged at the exit of the at least one mixing unit (16) and/or at the outlet (3) of the water duct (4).

11. Water outflow fitting according to any one of the claims 1 to 10, **characterized in that** it has means (17, 17') for determining a parameter which is relevant to the water quality, and **in that** the electrochemical cell (14) is regulated on the basis of this measurement.

12. Water outflow fitting according to any one of the claims 1 to 11, **characterized in that** it has indicator means (21) which give an indication of the water state.

13. Method for operating a water outflow fitting according to any one of the claims 1 to 12, **characterized in that** the water outflow fitting has a control device (8) and the electrochemical cell (14) is regulated by means of a sensor (17, 17') arranged in the water duct (4).

14. Method according to claim 13, **characterized in that** the sensor (17, 17') responds to ozone in the water and the electrochemical cell (14) is regulated according to the ozone concentration determined.

15. Method according to claim 14, **characterized in that** the ozone concentration is measured at the exit of a mixing unit (16).

## Revendications

1. Armature d'écoulement d'eau ayant un corps d'armature (2), qui présente un canal d'eau (4) ayant une entrée et une sortie (3), ayant une soupape d'eau (7) et ayant des moyens de désinfection de l'eau, où le moyen (14) de désinfection de l'eau est une cellule électrochimique disposée dans le canal d'eau (4), où la cellule électrochimique (14) est disposée après la soupape d'eau (7), vu en direction de courant, **caractérisée en ce que** la cellule électrochimique (14) est disposée dans un domaine dans le canal d'eau (4) dans lequel de l'eau stagnante se trouve dans le cas où la soupape d'eau (7) est fermée et de l'eau courante se trouve dans le cas où la soupape d'eau (7) est ouverte et la cellule électrochimique (14) se trouve dans l'eau stagnante dans le premier cas et est baignée ou rincée par l'eau dans le deuxième cas.

2. Armature d'écoulement d'eau selon la revendication 1, **caractérisée en ce que** la cellule électrochimique (14) est disposée dans un domaine ascendant du canal d'eau.

3. Armature d'écoulement d'eau selon une des revendications 1 à 2, **caractérisée en ce que** le canal d'eau (4) est disposé dans le corps d'armature (2).

4. Armature d'écoulement d'eau selon une des revendications 1 à 3, **caractérisée en ce que**, vu en direction de courant, au moins une unité de mélange (16) est disposée après la cellule électrochimique (14) dans laquelle un agent oxydant émis par la cellule électrochimique (14) est mélangé à de l'eau.

5. Armature d'écoulement d'eau selon la revendication 4, **caractérisée en ce que** l'au moins une unité de mélange (16), vu en direction de courant, est disposée après la soupape d'eau (7) et après la cellule électrochimique (14).

6. Armature d'écoulement d'eau selon la revendication 5, **caractérisée en ce que** l'au moins une unité de mélange (16) est disposée dans un domaine supérieur d'une colonne d'eau stagnante, lorsque la soupape d'eau est fermée.

7. Armature d'écoulement d'eau selon une des revendications 1 à 6, **caractérisée en ce que** elle présente au moins un capteur de proximité (12) connecté à un unité de contrôle (8), que l'unité de contrôle (8) est connectée avec la cellule électrochimique (14) et que la cellule électrochimique (14) peut être activée à travers le capteur de proximité (12).

8. Armature d'écoulement d'eau selon une des revendications 1 à 7, **caractérisée en ce que**, vu en direction de courant, elle présente des moyens de mesure (17, 17') pour la détermination de la concentration d'ozone dans l'eau après la cellule électrochimique (14) dans le canal d'eau (4).

9. Armature d'écoulement d'eau selon la revendication 8, **caractérisée en ce que** au moyen de la concentration d'ozone mesurée, la cellule électrochimique (14) est réglée.

10. Armature d'écoulement d'eau selon la revendication 9, **caractérisée en ce que** les moyens nommés (17, 17') sont disposés à la sortie de l'au moins une unité de mélange (16) et/ou à la sortie (3) du canal d'eau (4).

11. Armature d'écoulement d'eau selon une des revendications 1 à 10, **caractérisée en ce que** elle présente des moyens (17, 17') pour la détermination d'un paramètre, lequel est pertinent par rapport à la qualité d'eau et que la cellule électrochimique (14) est réglée à base de cette mesure.

12. Armature d'écoulement d'eau selon une des revendications 1 à 11, **caractérisée en ce qu'**elle présente des moyens d'affichage (21), qui donnent une indication sur l'état de l'eau.

13. Un procédé pour le fonctionnement d'une armature d'écoulement d'eau selon une des revendications 1 à 12, **caractérisé en ce que** l'armature d'écoulement d'eau présente un dispositif de contrôle (8) et la cellule électrochimique (14) est réglée au moyen d'un capteur (17, 17') disposé dans le canal d'eau (4).

14. Le procédé selon la revendication 13, **caractérisé en ce que** le capteur (17, 17') répond à l'ozone dans l'eau et la cellule électrochimique (14) est réglée de manière correspondant à la concentration d'ozone déterminée.

15. Le procède selon la revendication 14, **caractérisé en ce que** la concentration d'ozone est mesurée à la sortie de l'unité de mélange (16).
